# EUROPÄISCHE PATENTSCHRIFT

(11) **EP 0 753 451 B1**
(45) Veröffentlichungstag und Bekanntmachung des Hinweises auf die Patenterteilung: **02.11.2000**
(21) Anmeldenummer: 96111266.1
(22) Anmeldetag: 12.07.1996
(51) Int. Cl.: B62D 31/00, B62D 65/00

(54) **Karosseriemodul für ein Kraftfahrzeug**
Body module for a motor car
Module de carosserie d'un véhicule automobile

(30) Priorität: 14.07.1995 DE 29511422 U
(43) Veröffentlichungstag der Anmeldung: 15.01.1997
(73) Patentinhaber: HS-Products Karosseriesysteme GmbH, 82152 Krailling (DE)
(72) Erfinder: Hausrath, Udo, D-82319 Hadorf (DE)
(74) Vertreter: Wiese, Gerhard

(56) Entgegenhaltungen:
- EP-A- 0 650 861
- DE-A- 4 239 120
- FR-A- 959 086
- US-A- 1 710 874
- US-A- 3 298 733

## Beschreibung

Die Erfindung betrifft ein Karosseriemodul für ein Kraftfahrzeug nach dem Oberbegriff des Patentanspruchs 1.

Bei einem derartigen aus der US-A- 3 298 733 bekannte Karosseriemodul, ist der Modulbehälter am Fahrzeugaufbau schwenkbar und verschiebbar in der Weise gelagert, daß er den Gepäckraum des Fahrzeugs abdecken kann und aus dieser Position nach vorne verschwenkt werden kann, so daß der Gepäckraum nach oben hin freigelegt ist.

Aufgabe der Erfindung ist es, ein Karoseriemodul für ein Kraftfahrzeug, insbesondere ein Kleinfahrzeug, z. B. ein Stadtauto, zu schaffen, durch welches das Fahrzeug in mehrere Fahrzeugtypen umgestaltet werden kann.

Dies Aufgabe wird erfindungsgemäß durch die kennzeichnenden Merkmale des Patentanspruches 1 gelöst.

Im Modulbehälter, welcher insbesondere in Form eines Koffers aufweisen kann, sind die heckscheibe und beispielsweise der Heckscheibe zugeordnete Modulteile, wie Heckscheibenheizung, Scheibenwischer und dergl. und gegebenenfalls ein Heckabschlußteil bze. Seitenteile, welche seitlich der heckscheibe angeordnet sind, in ein- und ausfahrbarer Weise untergebracht. Ferner ist im Modulbehälter das Fahrzeugdach untergebracht. Diese Fahrzeugdach kann hierzu faltbar ausgebildet sein oder aus mehreren gegeneinander verschiebbaren Dachelementen bestehen.

Der Modulbehälter ist mit Formschluß und dicht in eine an den Modulbehälter angepaßte Ausnehmung im Heckbereich der Fahrzeugkarosserie einsetzbar. In bevorzugter Weise kann zum Aus- und Einfahren der Heckscheibe im Modulbehälter ein Fensterhebermechanismus, der von Hand oder elektrisch betätigbar ist, vorgesehen sein.

Im Modulbehälter sind zwei nebeneinander liegende Behälterbreiche vorgesehen, von denen der eine Behälterbereich die Heckscheibe und der andere Behälterbereich das Dach aufnehmen. Zum Ein- und Ausfahren der Heckscheibe und des Fahrzeugdaches ist in bevorzugter Weise am Modulbehälter ein schwenkbarer Deckel vorgesehen, welcher in das Fahrzeuginnere beim Ein- und Ausfahren geschwenkt werden kann.

Zur geeigneten Dachführung während des Faltens bzw. Verschiebens der Dachelemente kann ein in die Fahrzeugkarosserie einsetzbarer Dachrahmen mit integrierten Führungsschienen vorgesehen sein. Die Führungsschienen sind so ausgestaltet, daß das Dach während des Fahrens in zurückgeschobenem Zustand geöffnet sein kann und daß das Dach im gefalteten bzw. zusammengeschobenen Zustand aus dem Dachrahmen entfernt werden kann und in den Modulbehälter eingebracht werden kann.

Anhand der Figuren wird die Erfindung noch näher erläutert. Es zeigt:
- Fig. 1:: in perspektivischer Darstellung ein Ausführungsbeispiel außerhalb des Fahrzeugs;
- Fig. 2:: das Ausführungsbeispiel im am Fahrzeug montierten Zustand;
- Fig. 3:: eine Einzelheit im Bereich der Heckscheibe im Schnitt A-A der Fig. 2;
- Fig. 4:: einen in das Dach einsetzbaren Dachrahmen mit integrierten Führungsschienen;
- Fig. 5A B,C,D,E: einzelne Betriebsstellungen des Karosseriemoduls im eingebauten Zustand am Fahrzeug.

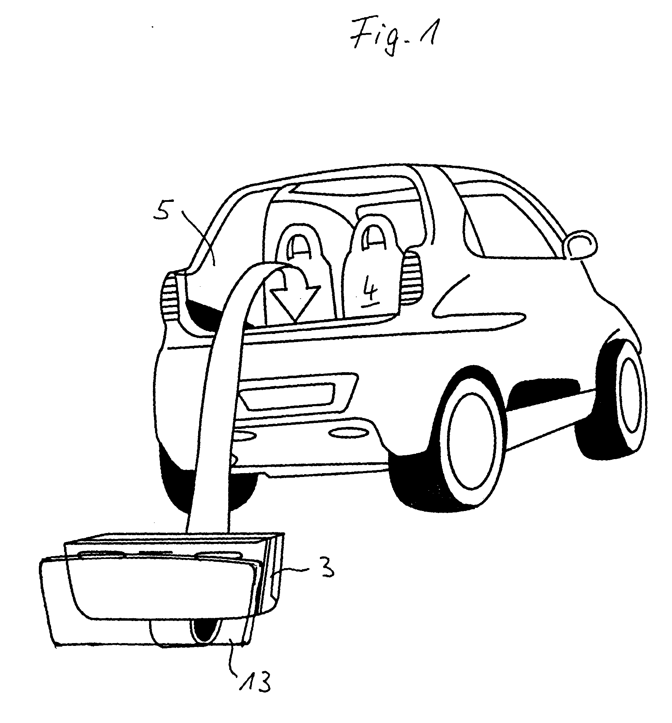

In der Fig. 1 ist ein Modulbehälter 3 eines Karosseriemoduls im ausgebauten Zustand gezeigt. Der Modulbehälter 3 kann in einer Ausnehmung 4 in einer Karosserie 5 eines Kraftfahrzeugs montiert werden. Die Montage erfolgt mit Formschluß und mit dichtem Einbau. Zur äußeren Anpassung des Modulbehälters 3 kann eine Blende 13 von außen aufgesetzt werden. Es ist jedoch auch möglich, die Außenfläche des Modulbehälters 3 an die Farbe und Formgebung der Karosserie 5 des Fahrzeugs anzupassen.

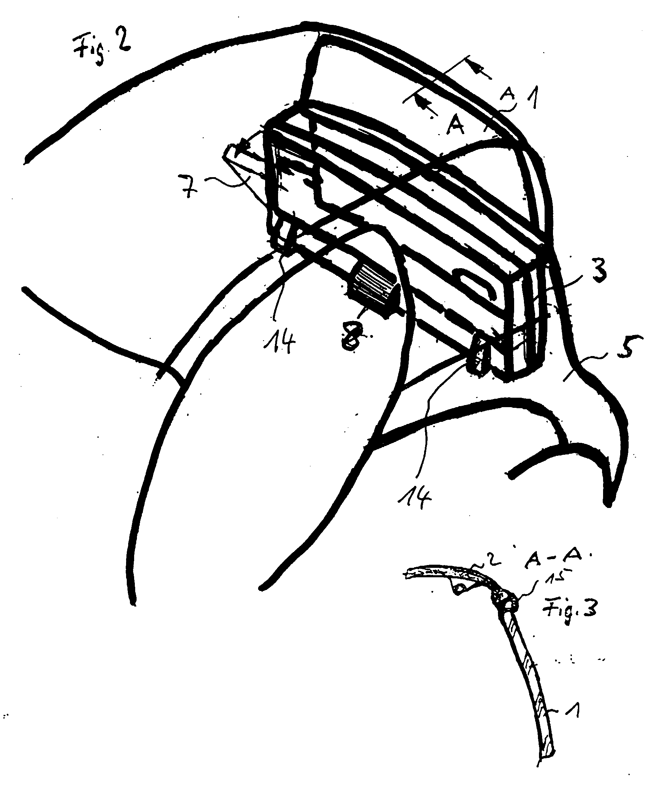

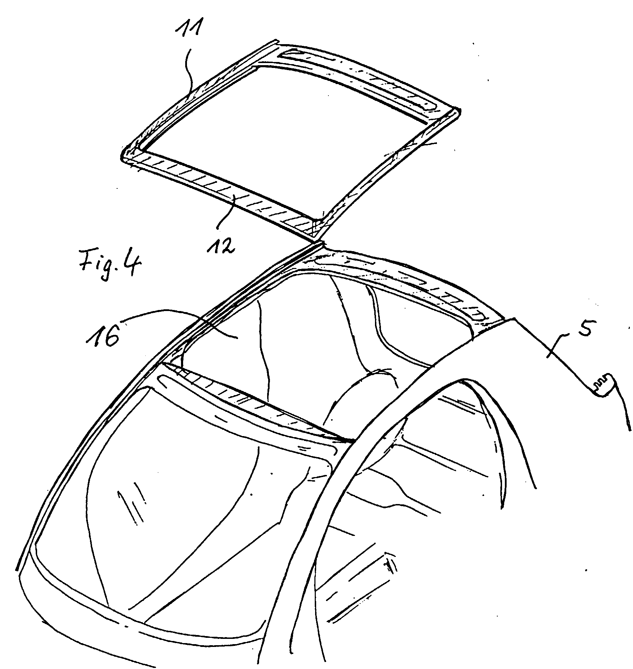

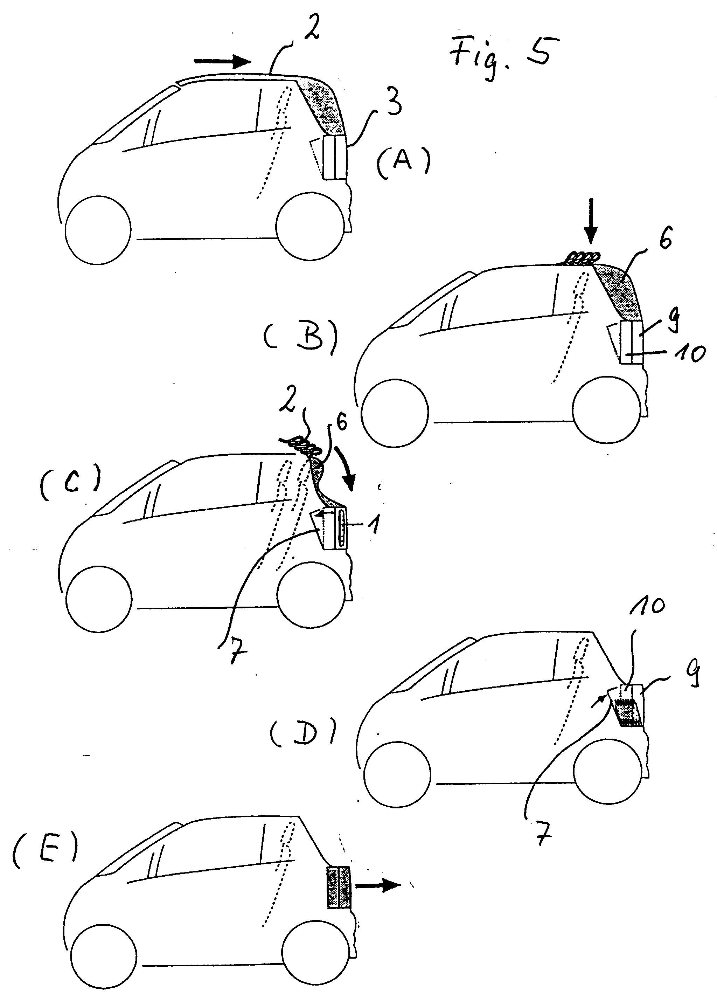

In der Fig. 2 ist der Modulbehälter 3 im eingebauten Zustand dargestellt. Der Modulbehälter 3 besitzt zwei Behälterbereiche, insbesondere Fächer 9 und 10, in welchen eine Heckscheibe 1 und ein Fahrzeugdach 2 untergebracht sind. Sowohl die Heckscheibe 1 als auch das Fahrzeugdach 2 können aus dem Modulbehälter 3 ausgefahren werden und, wie die Figuren 5 A - E zeigen, wieder eingefahren werden. Zum Ein- bzw. Ausfahren besitzt der Modulbehälter 3 einen in das Fahrzeuginnere klapp- bzw. schwenkbaren Deckel 7. Zum Befestigen des Modulbehälters 3 können Schnappverschlüsse 14 vorgesehen sein. Die Schnappverschlüsse können wieder gelöst werden, so daß das Karosseriemodul von der Fahrzeugkarosserie entfernt und gegebenenfalls durch ein anderes ersetzt werden kann.

Am Modulbehälter 3 sind ferner elektrische Verbindungsmittel 8, beispielsweise in Form von Steck- oder Schleifkontakten, vorgesehen, die mit korrespondierenden elektrischen Verbindungsmitteln an der Karosserie elektrisch kontaktiert werden können. Hierdurch wird die Stromversorgung gewährleistet für elektrische Modulelemente. Derartige elektrische Modulelemente können ein elektrischer Antrieb für den Fensterhebermechanismus zum Aus- und Einfahren der Heckscheibe 1 sein. Ferner kann ein elektrisch betriebener Scheibenwischer für das Glas der Heckscheibe 1 vorgesehen sein.

Wie die Fig. 3 zeigt, wird die Oberkante der Heckscheibe 1 beim Ausfahren gegen eine am rückwärtigen Teil des Daches 2 vorgesehene Abdichtung 15 angepreßt, so daß ein dichter Abschluß erreicht wird. In der Fig. 5 sind verschiedene Betriebsstellungen der Modulelemente des Karosseriemoduls dargestellt. In der Fig. 5 (A) sind die Heckscheibe und das Fahrzeugdach 2 vollständig ausgefahren, so daß das Fahrzeuginnere durch das Dach 2 vollständig abgedeckt ist und im Heckbereich durch die ausgefahrene Heckscheibe und den in der Fahrzeugkarosserie montierten Modulbehälter 3 vollständig nach außen hin abgeschlossen ist.

Das Fahrzeugdach 2 läßt sich entriegeln und zurückschieben. Im Falle eines Schiebedaches werden die Dachelemente, insbesondere das vordere Dachelement gegenüber dem hinteren Dachelement verschoben, wie es der Pfeil in der Fig. 5 (A) zeigt. Wenn das Fahrzeugdach als Faltdach wie beim dargestellten Ausführungsbeispiel ausgebildet ist, kann der faltbare Stoff des Daches zurückgeschoben werden, wie es die Fig. 5 (B) zeigt. Das Dach ist dann wie bei herkömmlichen Faltdächern geöffnet, und in dieser Dachstellung kann man mit dem Fahrzeug fahren.

Bei dem in der Fig. 5 (C) gezeigten Betriebsstellung ist die Heckscheibe 1 in das für sie vorgesehene Fach des Modulbehälters 3 eingefahren. Das gefaltete Dach 2 läßt sich gegebenenfalls mit Seitenteilen 6 zusammenklappen und, wie es in Fig. 5 (D) gezeigt ist, in das dafür vorgesehene Fach im Modulbehälter 3 unterbringen. Das Fach für die Heckscheibe 1 ist mit 9 bezeichnet, und das Fach für das zusammengeklappte bzw. zusammengefaltete Dach ist mit 10 bezeichnet. Wie die Figuren 5 (C) und (D) zeigen, ist der Deckel 7 nach innen geklappt, damit genügend Raum vorhanden ist, um insbesondere das Dach und gegebenenfalls die Seitenteile 6 im Modulbehälter 3 unterzubringen. Nach Schließen des Deckels 7 (Fig. 5E) ist das Fahrzeug wie ein Cabrio ausgebildet. Wenn man den Modulbehälter 3 aus der Karosserie entfernt, verwandelt sich das Fahrzeug in ein "Pick-up", in welchem auch lange Gegenstände, z.B. Surfbretter und dergl. untergebracht werden können.

Durch das Karosseriemodul der Erfindung läßt sich das Fahrzeug in drei Fahrzeugtypen, nämlich in ein Fahrzeug mit Faltdach bzw. teilweise geöffnetem Dach, wie bei einem Schiebedach, in ein Cabrio oder in ein Pick-up verwandeln. Das Karosseriemodul der Erfindung benötigt praktisch keinen zusätzlichen Montageaufwand. Es läßt sich in einfacher Weise mit Formschluß im Heckbereich der Karosserie 5 des Fahrzeugs unterbringen. Beim Fahrzeugkauf hat man mehrere Möglichkeiten für das Design des Fahrzeugdaches, insbesondere wenn dieses als Faltdach aus einem textilen Gewebe besteht.

Für die entsprechende Führung des Daches am Fahrzeug kann in eine Dachöffnung 16 der Karosserie 5 ein Dachrahmen 12 eingesetzt werden. In den Dachrahmen 12 sind seitliche Führungsschienen 11 für das Faltdach bzw. für die gegeneinander verschiebbaren Dachelemente beim Schiebedach vorgesehen. Dieser Dachrahmen kann in der Weise ausgebildet sein, daß das Schiebedach bzw. Faltdachz zwischen der A- und der B-Säule an der A-Säule entriegelt werden kann und wie ein normales Faltfach (Fig. 5B) funktioniert.

Das Faltdach schiebt sich wellenförmig zusammen, wenn es bis zur B-Säule zurückgeschoben wird und rastet automatisch ein. Anschließend kann das Dach bei eingefahrener Heckscheibe (Fig. 5C) beispielsweise von Hand zusammengefaltet und von der Führungsschiene 11 entfernt werden und im Modulbehälter 3 verstaut werden.

Gegebenenfalls können die Seitenteile 6 auch hinter den sich an die B-Säule anschließenden Karosserieteilen und der B-Säule eingeschoben und wieder ausgefahren werden. Die Seitenteile besitzen ähnliche Dichtungsmittel, wie sie die Dichtung 15 für die obere Kante der Heckscheibe 1 (Fig. 3) darstellt. Diese seitlichen Dichtungsmittel dienen zur seitlichen Abdichtung der Heckscheibe.

## Patentansprüche

1. Karosseriemodul für ein Kraftfahrzeug mit einem Modulbehälter (3), in welchem die Heckscheibe (1) und das Fahrzeugdach (2) des Kraftfahrzeugs in ausfahrbarer Weise angeordnet sind,
dadurch **gekennzeichent,** daß
der Modulbehälter (3) mit Formschluß in eine Ausnehmung (4) im Heckbereich der Fahrzeugkarosserie (5) einsetzbar ist.

2. Karosseriemodul nach Anspruch 1, dadurch gekennzeichnet, daß der Modulbehälter (3) einen Fensterhebermechanismus zum Aus- und Einfahren der Heckscheibe (1) aufweist.

3. Karosseriemodul nach Anspruch 1 oder 2, dadurch gekennzeichnet, daß ferner Seitenteile (6), welche seitlich der Heckscheibe (1) an der Karosserie angeordnet sind, in den Modulbehälter (3) aus- und einfahrbar sind.

4. Karosseriemodul nach einem der Ansprüche 1 bis 3, dadurch gekennzeichnet, daß am Modulbehälter (3) im eingebauten Zustand ein beim Aus- und Einfahrvorgang in das Fahrzeuginnere klappbarer Deckel (7) vorgesehen ist.

5. Karosseriemodul nach einem der Ansprüche 1 bis 4, dadurch gekennzeichnet, daß am Modulbehälter (3) elektrische Verbindungsmittel vorgesehen sind, welche zur Stromversorgung von elektrischen Modulelementen mit korrespondierenden Verbindungsmitteln an der Fahrzeugkarosserie (5) kontaktierbar sind.

6. Karosseriemodul nach einem der Ansprüche 1 bis 5, dadurch gekennzeichnet, daß das Fahrzeugdach faltbar ist.

7. Karosseriemodul nach einem der Ansprüche 1 bis 5, dadurch gekennzeichnet, daß das Fahrzeugdach (2) aus mehreren gegeneinander in Fahrzeuglängsrichtung verschiebbaren Dachelementen besteht.

8. Karosseriemodul nach einem der Ansprüche 1 bis 7, dadurch gekennzeichnet, daß das Fahrzeugdach (2) und die Heckscheibe (1) in nebeneinander liegenden Fächern (9, 10) im Modulbehälter (3) angeordnet sind.

9. Karosseriemodul nach einem der Ansprüche 1 bis 8, dadurch gekennzeichnet, daß das Fahrzeugdach (2) mittels Führungsschienen (11), welche in einem in die Fahrzeugkarosserie (5) einsetzbaren Dachrahmen (12) integriert sind, geführt sind.

10. Karosseriemodul nach einem der Ansprüche 1 bis 9, dadurch gekennzeichnet, daß als weitere Modulteile eine Heckscheibenheizung und ein Scheibenwischer für die Heckscheibe vorgesehen sind.

## Claims

1. Car body module for a motor vehicle with a module container (3) in which the rear window (1) and the roof (2) of the car are located in an extendable manner,
characterised in that
the module container (3) can be inserted in a recess (4) at the rear of the car body in a form-locking manner.

2. Car body module according to claim 1, characterised in that the module container (3) is fitted with a window raising mechanism to raise and lower the rear window (1).

3. Car body module according to claim 1 and 2, characterised in that lateral elements (6) fitted to the car body at the side of the rear window (1) can be inserted in and retracted from the module container (3).

4. Car body module according to one of claims 1 to 3, characterised in that a lid (7) is fitted to the module container (3) in the built-in condition which can be tilted into the inside of the vehicle during the entering and retracting process.

5. Car body module according to one of claims 1 to 4, characterised in that electric connections are incorporated in the module container (3) which are able to make contact with corresponding electric connections in the car body (5) in order to supply current to electric module elements.

6. Car body module according to one of claims 1 to 5, characterised in that the roof of the car is foldable.

7. Car body module according to one of claims 1 to 5, characterised in that the roof (2) of the car consists of several roof elements displaceable against each other in the longitudinal axis of the motor vehicle.

8. Car body module according to one of claims 1 to 7, characterised in that the roof (2) of the car and the rear window (1) are located in compartments (9,10) adjoining each other inside the module container (3).

9. Car body module according to one of claims 1 to 8, characterised in that the roof (2 ) of the car moves along guide rails (11) integrated in a roof frame (12) which can be inserted in the car body (5).

10. Car body module according to one of claims 1 to 9, characterised in that a rear window heater and a screen wiper for the rear window are provided in the form of additional module elements.

## Revendications

1. Module de carrosserie d'un véhicule automobile comportant un conteneur de module (3) dans lequel la lunette arrière (1) et le toit (2) du véhicule automobile sont disposés de manière à pouvoir être sortis, caractérisé en ce que le conteneur de module (3) peut être placé par engagement positif dans un creux (4) dans l'arrière de la carrosserie du véhicule (5).

2. Module de carrosserie selon la revendication 1, caractérisé en ce que le conteneur de module (3) présente un mécanisme de lève-glace pour monter ou descendre la lunette arrière (1).

3. Module de carrosserie selon les revendications 1 ou 2, caractérisé en ce que par ailleurs des parties latérales (6) qui sont disposées à la carrosserie latéralement par rapport à la lunette arrière (1) peuvent être sorties ou rentrées dans le conteneur de module (3).

4. Module de carrosserie selon l'une quelconque des revendications 1 à 3, caractérisé en ce qu'un couvercle (7) rabattable vers l'intérieur du véhicule lors de l'opération de sortie et de rentrée est prévu au conteneur de module (3) à l'état monté.

5. Module de carrosserie selon l'une quelconque des revendications 1 à 4, caractérisé en ce que des moyens de connexion électriques sont prévus au conteneur de module (3) qui peuvent être mis en contact pour l'alimentation en courant d'éléments de module électriques avec des moyens de connexion correspondants à la carrosserie du véhicule (5).

6. Module de carrosserie selon l'une quelconque des revendications 1 à 5, caractérisé en ce que le toit du véhicule est pliable.

7. Module de carrosserie selon l'une quelconque des revendications 1 à 5, caractérisé en ce que le toit de véhicule (2) consiste en plusieurs éléments de toit pouvant être déplacés réciproquement en direction longitudinale du véhicule.

8. Module de carrosserie selon l'une quelconque des revendications 1 à 7, caractérisé en ce que le toit de véhicule (2) et la lunette arrière (1) sont disposés dans des compartiments juxtaposés (9, 10) dans le conteneur de module (3).

9. Module de carrosserie selon l'une quelconque des revendications 1 à 8, caractérisé en ce que le toit de véhicule (2) est guidé moyennant des rails de guidage (11) qui sont intégrés dans un cadre de toit (12) qui peut être placé dans la carrosserie du véhicule.

10. Module de carrosserie selon l'une quelconque des revendications 1 à 9, caractérisé en ce que sont prévus comme autres pièces de module un chauffage de lunette arrière et un essuie-glace pour la lunette arrière.
